# EUROPEAN PATENT APPLICATION

(11) **EP 4 738 044 A1**
(43) Date of publication of application: **06.05.2026**
(21) Application number: 25205616.3
(22) Date of filing: 30.09.2025
(51) Int. Cl.: G05D 16/00

(54) **DIFFERENTIAL PRESSURE CONTROL VALVE**

(30) Priority: 29.10.2024 IT 202400024168
(71) Applicant: CIMBERIO HOLDING S.r.l., 20145 Milano (IT)
(72) Inventor: CIMBERIO, Roberto, 28010 Ameno Fraz. Vacciago (NO) (IT); GUIDETTI, Tiziano, 28010 Ameno Fraz. Vacciago (NO) (IT); CHIARELLO, Andrea, 28010 Ameno Fraz. Vacciago (NO) (IT)
(74) Representative: PGA S.p.A.

(57) **Abstract**

A differential pressure control valve (100) for a hydraulic system (200) is described. The valve (100) comprises an inlet (1i), an outlet (1u), a main channel (2) that connects the inlet (1i) to the outlet (1u), and an auxiliary chamber (4); the valve (100) also comprises a sealing element (3) that separates the main channel (2) from the auxiliary chamber (4) and a control inlet (5) in fluid communication with the auxiliary chamber (4). The valve (100) further comprises a flow control member (7) having an active portion (8) operating in the main channel (2) and cooperating with an intermediate portion (2m) of said main channel, so as to define at least one passage opening (9) of variable width. One of the active portion (8) of the regulating member and the intermediate portion (2m) of the main channel defines a secondary channel (10) that connects the inlet (1i) and the outlet (1u) in fluid communication. A hydraulic system (200) that uses the valve (100) in a return branch of the system is also described. Finally, a method for controlling the hydraulic system (200) is described.

## Description

### Field of the invention

The invention relates to the field of fluid valves and, more specifically, to a differential pressure control valve. The valve may be used for controlling pressure in hydraulic systems for example of heating and/or cooling plants.

### Background art

Differential pressure control valves (DPCVs) are valves equipped with a main conduit having an inlet and an outlet; DPCVs also comprise a diaphragm and a slider body that is movable relative to the valve body itself, which defines an opening of variable width for the passage of a fluid between the inlet and the outlet; the valve slider body is fixed to the diaphragm, which is typically positioned in a chamber divided into a first portion in fluid communication with the main conduit, and a second portion hydraulically isolated from the first portion, which is in fluid communication with an auxiliary control inlet connectable to a desired control point upstream of the user or system in which the valve is installed. Differential pressure control valves are so named because they allow the pressure difference between the first and second portions of the chamber to be kept under control, for example, substantially constant, regardless of the flow of fluid through the main conduit.

It should also be noted that DPCV valves of the known type also allow the desired differential pressure value to be set. For this purpose, differential pressure control valves typically have a control that allows the setting of the pressure differential Dp that is desired to be maintained between the first and second portions of the chamber; this control typically includes an adjustment device, for example a screw, which acts on a preload spring acting on the slider body. The differential pressure Dp is set between a minimum and maximum value by operating the adjustment device.

The differential pressure control valves described above can be installed, for example, in closed circuits of domestic, industrial, or commercial systems to allow the balancing of the direct flow, in particular but not limited to, cooling or heating systems. Differential pressure control valves are inserted into the system in such a way that the control inlet is connected, via a small pipe, to an inlet or supply pipe of the system, at a control point located upstream of one or more user units (e.g., comprising one or more heat exchangers or other components), while the main pipe of the valve has its inlet and outlet connected in series to the return pipe of the system itself.

The applicant noted that, under the operating conditions described, differential pressure control valves are often characterized by unwanted vibrations or rapid and uncontrolled oscillations of the moving parts, in particular the slider body.

In certain situations, these vibrations result in multiple contacts between the end of the slider body and the valve body, causing considerable noise and potentially leading to damage.

The behavior described may also cause the valve to be substantially unable to ensure compliance with the differential pressure setting value set by the user.

### Object of the invention

In light of the above, one purpose of the invention is therefore to provide a differential pressure control valve that resolves one or more of the above-described drawbacks.

More specifically, one purpose of the present invention is to provide a differential pressure control valve in which uncontrolled vibrations of the moving parts during the operational use of the valve are reduced or eliminated.

A further purpose is to provide a differential pressure control valve in which mechanical interference is reduced, and noise is therefore minimized.

Last but not least, an auxiliary purpose of the invention is to provide a differential pressure control valve that ensures reasonable compliance with the differential pressure setting value set by the user.

### Summary of the invention

Aspects of the invention are described below.

A 1st aspect concerns a differential pressure control valve (100) for a hydraulic system; the valve (100) comprises:
- a valve body (1) defining an inlet (1i), an outlet (1u), a main channel (2) that places the inlet (1i) in fluid communication with the outlet (1u), and an auxiliary chamber (4),
- a sealing element (3) separating the main channel (2) from the auxiliary chamber (4),
- a control inlet (5) in fluid communication with the auxiliary chamber (4),
- a flow regulating organ (7) having an active portion (8) operating in the main channel (2),
wherein the valve is configurable in an operating condition wherein the active portion (8) of the flow regulating organ (7) cooperates with an intermediate portion (2m) of said main channel (2), so as to define at least one passage opening (9) of variable amplitude that allows fluid communication between the inlet (1i) and the outlet (1u);

In a 2nd aspect, in accordance with the previous aspect, at least one between the active portion (8) of the flow regulating organ (7) and the intermediate portion (2m) of the main channel (2) defines a secondary channel (10; 10') that places the inlet (1i) and outlet (1u) in fluid communication.

In a 3rd aspect, according to any of the previous aspects, the or a secondary channel (10; 10') is configured to constantly place in fluid communication the inlet (1i) and the outlet (1u), regardless of the position of the active portion (8) of the flow regulating organ (7) with respect to the main channel (2). In other words, the flow passage cross section of the secondary channel, along its entire axial extension does not change irrespective of the position of the active portion (8) of the flow regulating organ (7) because the secondary channel is not affected by the flow regulating organ and is always allowing fluid passage.

In a 4th aspect, according to either of the two preceding aspects, the valve is configured so that, in said operating condition, the active portion (8) of the flow regulating organ (7) can reach an end-stroke position wherein the active portion (8) itself acts in abutment against a corresponding counter-surface (11) of the intermediate portion (2m) of said main channel (2), and wherein the secondary channel (10; 10') places the inlet (1i) and outlet (1u) in fluid communication even when the active portion (8) of the flow regulating organ (7) is in said end-stroke position.

In a 5th aspect, according to any of the previous aspects, the active portion (8) of the flow regulating organ (7) comprises the following elements arranged on one side of the active portion itself, facing the or a counter-surface (11) of the intermediate portion (2m) of the main channel (2):
- a continuous base (12), optionally having a flat surface, and
- a side wall (13), emerging transversely from the continuous base (12) approaching said counter-surface (11) and defining a cavity of the active portion (8) facing the same counter-surface.

The continuous base (12) optionally has a flat surface and the side wall emerges orthogonally or almost orthogonally from the flat surface of the continuous base.

In a 6th aspect according to any of the previous aspects, the active portion (8) of the flow regulating organ (7) comprises, on a side facing the counter-surface (11) of the intermediate portion (2m) of the main channel (2), a/the continuous base (12) and a/the side wall (13),
wherein the side wall (13) emerges transversely from the continuous base (12) and extends towards said counter-surface (11) to define a/the cavity of the active portion (8) facing said counter-surface (11).

In a 7th aspect according to either of the two preceding aspects, the side wall (13) emerges from a perimeter edge of the continuous base (12) and has a constant height (h) for a predominant part of its development around the base, said height (h) being measured perpendicularly to the continuous base (12).

In an 8th aspect according to the previous aspect, the continuous base has a flat circular surface, and the side wall (13) has an externally cylindrical shape and internally cylindrical or truncated conical shape.

In a 9th aspect according to any of the four preceding aspects, the secondary channel (10) is formed on said side wall and extends transversely to the latter.

In a 10th aspect according to any of the five previous aspects, the secondary channel (10) is defined by a recess present on a free edge of the side wall (13) opposite the continuous base (12).

In an 11th aspect according to the previous aspect, said recess has a curvilinear profile, for example semicircular.

In a 12th aspect according to any of the aspects from the 5th to the 9th, the secondary channel is defined by a through orifice formed in the side wall or in the continuous base.

In a 13th aspect according to the previous aspect, said through orifice has a curvilinear profile, for example circular.

In a 14th aspect according to aspect 10 or 11, the free edge of said side wall (13) lies on the same plane with the exception of said recess forming the secondary channel (10), said recess extending transversely to the side wall (13), crossing the entire thickness of the side wall itself so as to constantly place an internal volume of the cavity present in the active portion (8) in fluid communication with the outlet (1u) of said main channel (2).

In a 15th aspect according to any of the preceding aspects, in combination with the 2nd aspect, the secondary channel (10; 10') has a net fluid passage section whose area is at least 10 times smaller than the area of the fluid passage section of said inlet (1i) of the main channel (2).

In a 16th aspect according to any of the preceding aspects, in combination with the 2nd aspect, the secondary channel (10; 10') has a net fluid passage cross-section whose area is at least 100 times smaller than the area of the fluid passage cross-section of said inlet (1i) of the main channel (2).

In a 17th aspect according to any of the preceding aspects, in combination with the 2nd aspect, the secondary channel (10; 10') has a net fluid passage section whose area is at least 10 times smaller than the area of the fluid passage section of said outlet (1u) of the main channel (2).

In an 18th aspect according to any of the preceding aspects, in combination with the 2nd aspect, the secondary channel (10; 10') has a net fluid passage section whose area is at least 100 times smaller than the area of the fluid passage section of said outlet (1u) of the main channel (2).

In a 19th aspect according to any of the preceding aspects, in combination with the 2nd aspect, the secondary channel (10; 10') has a net fluid passage section whose area is less than 2 mm².

In a 20th aspect according to any of the preceding aspects, in combination with the 2nd aspect, the secondary channel (10; 10') has a net fluid passage section whose area is less than 1 mm².

In a 21st aspect according to any of the preceding aspects, in combination with the 2nd aspect, the secondary channel (10; 10') has a net fluid passage cross-section whose area is between 0.20 and 0.75 mm².

In a 22nd aspect according to any of the preceding aspects, in combination with the 2nd aspect, the axial extension of the secondary channel (10, 10') is less than 3 mm.

In a 23rd aspect according to any of the preceding aspects, in combination with the 2nd aspect, the axial extension of the secondary channel (10, 10') is less than 2 mm.

In a 24th aspect according to any of the preceding aspects, in combination with the 2nd aspect, the axial extension of the secondary channel (10, 10') is between 0.15 mm and 1.5 mm.

In a 25th aspect according to any of the previous aspects, in combination with the 4th aspect, the intermediate portion (2m) of the main channel (2) defines an intermediate opening (2a), interposed between the inlet (1i) and the outlet (1u), of predetermined dimensions and shape, said intermediate opening being delimited by a radially inner edge (16) of the counter-surface (11).

In a 26th aspect according to the previous aspect, in combination with the 5th aspect, said radially inner edge (16) emerges transversely with respect to a surrounding flat region (17) of the counter-surface (11), said radially inner edge (16) extending along the entire perimeter of the intermediate opening (2a), coaxially and in a radially inner position with respect to said side wall (13).

In a 27th aspect according to the previous aspect, the secondary channel (10) or an additional secondary channel (10') is defined at and crossing said radially inner edge (16) of the reference surface.

In a 28th aspect according to any of the previous aspects, the sealing element (3) is radially interposed between the flow regulating organ (7) and the valve body (1), wherein the flow regulating organ (7) is coupled to the sealing element (3) so as to present the active portion (8) operating in the main channel (2).

In a 29th aspect according to any of the preceding aspects, the flow regulating organ (7) comprises a slider body (18) operatively connected to the active portion (8), wherein said slider body (18), in the operating condition of the valve, is axially movable relative to the valve body (1) along a predefined axis (X) to position the active portion (8) of the flow regulating organ (7) in a plurality of positions relative to the valve body (1), determining a variable amplitude of the fluid passage opening (9), said amplitude being variable as a function of a value assumed by a pressure differential between a pressure (P+) present in the auxiliary chamber (4) and a pressure (P-) present in the main channel (2).

In a 30th aspect according to the previous aspect, the sealing element (3) comprises an annular membrane having an outer perimeter (3a) fixed in a fluid-tight manner to the valve body (1) and an inner perimeter (3b) fixed in a fluid-tight manner to an intermediate zone of the slider body (18), so that the slider body itself has a portion extending inside the main channel (2) and a portion extending inside the auxiliary chamber (4).

In a 31st aspect according to either of the two previous aspects, the flow regulating organ (7) comprises an elastic body (19), optionally a coil spring, acting on the slider body; wherein said elastic body (19) is configured to counteract a movement of the slider body (18) and the active portion (8) that reduces the amplitude of the passage opening (9); in other words, the elastic body (19) is configured to counteract a movement of the slider body and active portion toward and in approach to the intermediate portion.

In a 32nd aspect according to either of the three previous aspects, the flow regulating organ (7) comprises an/the elastic body (19), formed by a coil spring, acting on the slider body; and wherein said elastic body (19) is configured to counteract a movement of the slider body (18) and the active portion (8) that is directed to reduce the width of the passage opening (9); in other words, the elastic body (19) is configured to counteract a movement of the slider body and active portion toward and in approach to the intermediate portion.

In a 33rd aspect according to any of the four preceding aspects, the slider body (18) has a tubular shape and terminally carries the active portion (8).

In a 34th aspect according to any of the five preceding aspects, the flow regulating organ (7) comprises a rod (20) having at least a predominant portion (i.e., a portion with length more than 50% of the whole rod length) extending internally within the slider body (18).

In a 35th aspect according to any of the four preceding aspects, said elastic body (19) is interposed between said rod (20) and said slider body (18).

In a 36th aspect according to any of the five preceding aspects, the rod (20) has a first terminal portion to which a first end of the elastic body (19) is connected, and a second terminal portion passing through an axial opening provided on the slider body (18) on the opposite side to said active portion (8); and wherein a second end of the elastic body (19) is axially active on the slider body (18) (for example, pushing on a folded lip of the slider body).

In a 37th aspect according to any of the preceding aspects, in combination with the 34th aspect, the rod has:
- a first half-part (22) housed internally within the slider body (18), and
- a second half-part (23) partially emerging from the slider body (18) and passing through a wall of the valve body (1).

In a 38th aspect according to the previous aspect, the second half-part (23) of the rod has a first end, inside the valve body, removably coupled to the first half-part (22), for example by means of a threaded coupling, so that the overall length of the rod (20) can be adjusted.

In a 39th aspect according to either of the two previous aspects, the valve has an operating element (24), which can be operated from outside the valve body (1) and is coupled to a second end of the second half-part (23) of the rod (20), wherein rotation of the operating element (24) causes a corresponding rotation of the second half-part (23) of the rod and thus an elongation or shortening of the rod (20).

In a 40th aspect according to any of the three previous aspects, the first half (22) of the rod (20) is axially movable with respect to the slider body (18) at least between the following relative positions:
- an extended position, in which the part of the rod (20) inside the slider body (18) assumes maximum axial extension,
- a contracted position, in which the part of the rod (20) inside the slider body assumes minimum axial extension,
- a plurality of intermediate positions between the extended and contracted positions.

A 41st aspect concerns a hydraulic system (200) comprising a delivery pipe (202) supplying a predetermined number of users (201), optionally a predetermined number of heat exchangers, and a return pipe (203) configured to receive fluid output from the users, the hydraulic system (200) also comprising a valve (100) according to any of the previous aspects.

In a 42nd aspect according to the previous aspect, the valve (100) is installed on the return pipe (203) with the control inlet (5) connected to the delivery pipe (202) so as to receive a pressure signal from the delivery pipe.

In a 43rd aspect, according to the previous aspect, the control inlet is connected to a point upstream of the users (201).

A 44th aspect concerns a method of controlling a hydraulic system (200) according to any of the three preceding aspects, the method comprising:
- a step of installing a valve (100) according to any one of the 1st to 40th aspects at a return pipe (203) of the hydraulic system (200), such that the inlet (1i) of the valve (100) is connected upstream to the return pipe (203) and such that the outlet (1u) of the valve (100) is connected downstream to the return pipe (203) and such that the control input (5) is connected to the delivery pipe (202);
- at least one step of adjustment of the valve (100) by means of an action on said operating element to configure the valve (100) according to the operating condition in which the variation in the fluid passage opening (9) between the inlet (1i) and the outlet (1u) is determined by the variation in the position assumed by the active portion (8) of the flow regulating organ (7) relative to the valve body (1).

In a 45th aspect according to the previous aspect, said variation in the passage opening (9) maintains a pressure differential between a pressure (P+) present in the auxiliary chamber (4) and the pressure (P-) present in the channel within a predetermined range of a predefined value, regardless of a fluid flow through the return conduit (203) or the pumping or head conditions imposed by a pump operating on or connected to the delivery channel.

In a 46th aspect according to aspect 44 or 45, a step of adjustment of valve (100) is provided by means of an action on the operating element that configures the valve (100) in at least one further operating configuration in which the fluid passage opening (9) between the inlet (1i) and the outlet (1u) is maintained at a predefined width regardless of the pressure differential between the pressure (P+) present in said auxiliary chamber (4) and the pressure (P-) present in the main channel (2).

In a 47th aspect according to any of the three preceding aspects, the method comprises a variation step, for example by the action of an operator or an automatic actuation system, of the predefined value of the pressure differential between the pressure (P+), present in the auxiliary chamber (4), and the pressure (P-), present in the channel, by means of a variation in the position, in particular the angular position, that said operating element assumes relative to the valve body (1).

### Description of the figures

Further features and advantages of the invention will be described in more detail with reference to the accompanying exemplifying figures, in which:
- Figure 1 illustrates a side view of the valve according to aspects of the invention, wherein a small tube is coupled to the valve allowing the valve to be connected to a control point of a system (for example a hydraulic system of a heating and/or cooling plant);
- Figure 2a illustrates a longitudinal sectional view of the valve of Figure 1, in a possible operating configuration in which the preload on an elastic element (spring) inside the valve is minimal;
- Figure 2b shows a longitudinal sectional view of the valve in Figure 1, in a possible operating configuration in which the preload on an elastic element (spring) inside the valve is maximum;
- Figure 2c illustrates a longitudinal sectional view of the valve of Figure 1, in a possible operating configuration, in which the preload on an elastic element (spring) inside the valve is intermediate between that of Figure 2a and that of Figure 2b;
- Figure 3 is a perspective view of a detail terminally carried by a slider body of the valve according to the invention;
- Figure 4 is a sectional view of the detail of Figure 3; and
- Figure 5 schematically shows a hydraulic system (for example a hydraulic system of a heating and/or cooling plant) comprising the valve referred to in the previous figures.

### Detailed description of non-limiting embodiments of the invention

Reference number 100 indicates a differential pressure control valve as a whole.

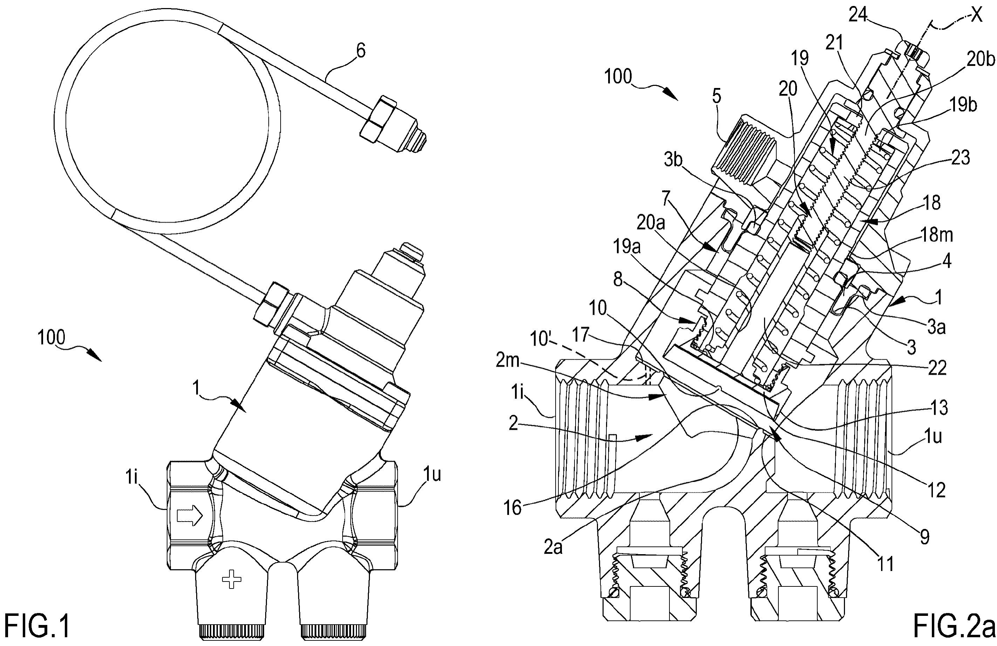

As illustrated in Figure 1 and Figures 2a-2c, valve 100 comprises a valve body 1, for example made of metal such as brass or its alloy. The valve body 1 has a base portion or lower portion (in relation to how the valve is shown in Figure 1 and Figures 2a-2c; obviously, the valve can be installed in any orientation) with an inlet 1i, an outlet 1u, and a main channel 2 extending between the inlet 1i and the outlet 1u through which a working fluid, for example water or a technical liquid or other working fluid, flows along a predefined flow direction from the inlet 1i towards the outlet 1u.

As can be seen, for example, in Figures 2a-2c, the valve body 1 houses a sealing element 3, for example comprising an elastically deformable membrane, which separates in a fluid-tight manner the main channel 2 from an auxiliary chamber 4, also defined internally within the valve body 1, adjacent to the main channel 2.

The valve 100 has a control inlet 5, also defined on the valve body 1; the control inlet 5 is in fluid communication with the auxiliary chamber 4 and, as can be seen in Figure 1, may be connected to a small tube 6 which, as will be described below, serves to connect the control inlet 5 to a desired point in the system 200 on which the valve 1 may be installed.

Valve 100 also includes a flow regulating organ 7 having an active portion 8 which operates in the main channel 2: more specifically, valve 100 can be configured in an operating condition in which the active portion 8 of the flow regulating organ 7 cooperates with an intermediate portion 2m of the main channel 2 so as to define at least one passage opening 9 of variable amplitude or size that allows fluid communication between the inlet 1i and the outlet 1u. In practice, the active portion 8 is configured to assume, depending on the pressure difference between the pressure P+ present in the auxiliary chamber 4 and the pressure P-(typically lower than P+), a plurality of positions, determining an adjustment of the size/amplitude of the passage opening and thus maintaining the pressure differential substantially constant regardless of the fluid flow through the main channel 2 or the pressure head of the system in which the valve operates.

As shown in Figures 2a-2c, 3, and 4, the active portion 8 of the control device 7 defines a secondary channel 10 that connects the inlet 1i and the outlet 1u. Alternatively (variant shown schematically in Figure 2a), the secondary channel that connects the inlet 1i and the outlet 1u at the intermediate portion of the main channel, for example in the form of a (relatively narrow compared to the size of inlet 1i and outlet 1u) channel or fluid path or duct or grove 10'. In both alternatives, the secondary channel 10 or 10' is distinct from and additional to the main channel; in other words, the secondary channel creates a fluid passage (additional to that created by the passage opening 9 in the absence of channel 10, 10') that is very narrow but nevertheless sufficient to constantly create an additional outlet for the fluid. More specifically, the secondary channel 10, 10' is configured and positioned to constantly place in fluid communication the inlet 1i and the outlet 1u, regardless of the position of the active portion of the flow regulating organ with respect to the main channel.

In other words, even if, during use in said operating condition, the active portion 8 of the flow regulating organ 7 were to reach a limit position, in which the active portion itself acts in abutment against a corresponding counter-surface 11 of the intermediate portion 2m of said main channel 2, the secondary channel 10, 10' would still connect the inlet 1i and the outlet 1u. For example, even if the active portion 8, upon reaching the end position, were to achieve a fluid seal, this fluid seal would not extend to the secondary channel 10, 10', which would in any case constantly connect an upstream side and a downstream side (with reference to a hypothetical flow direction from the inlet to the outlet of the valve) of the active portion 8.

Thus, the flow passage cross section of the secondary channel, along its entire axial extension does not change irrespective of the position of the active portion 8 of the flow regulating organ 7.

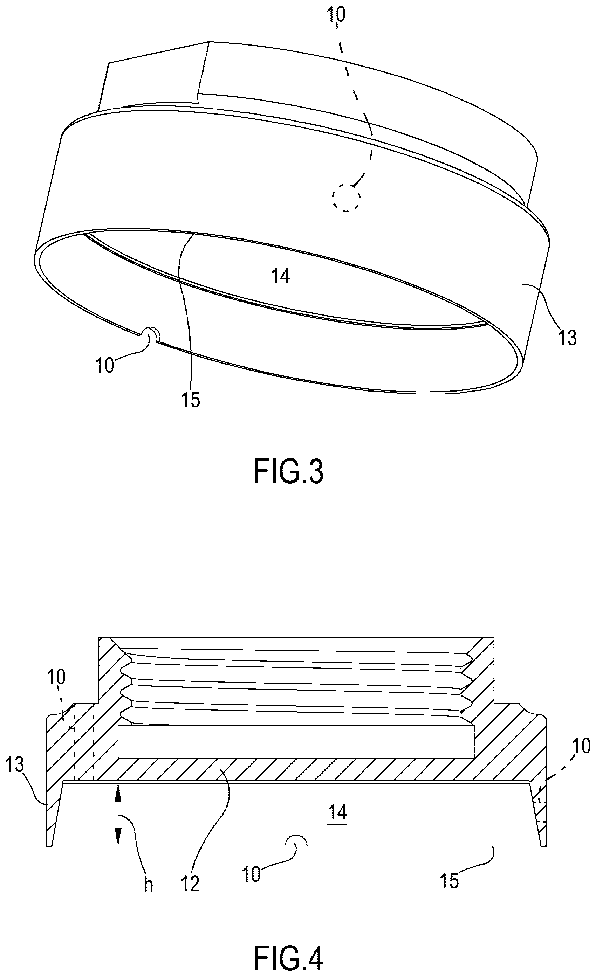

Going into greater structural detail of the example shown in the accompanying figures, it can be seen that the active portion 8 of the flow regulating organ 7 comprises a continuous base 12, positioned on one side of the active portion facing the counter-surface 11 of the intermediate portion 2m of the main channel; the active portion also includes a side wall 13, emerging transversely from the continuous base and extending towards the counter-surface 11. The continuous base 12 and the side wall 13 define a substantially cup-shaped body defining a cavity 14 of the active portion facing the counter-surface 11. As can be seen in Figures 2a-2c and 4, the continuous base 12 is defined by a continuous flat surface, the side wall 13 emerges from a perimeter edge of the continuous base and has a constant height h (measured perpendicular to the continuous base) for a predominant part of its development around the base 12 (in practice, for the entire extension of the side wall, except for the area where the secondary channel 10 is located).

In the non-limiting examples illustrated, the flat surface of the base 12 is circular in shape and the side wall 13 has an externally cylindrical shape and internally cylindrical or truncated conical shape. In turn, the secondary channel 10 is formed on said side wall 13 and extends transversely to the latter. It should be noted that although a solution with a single secondary channel is shown, the possibility of providing multiple secondary channels is not excluded.

The, or each, secondary channel 10 may be defined by a recess or indent present on a free end edge 15 of the side wall 13 opposite the surface of the base 12; for example, the recess or indent may have a V-shaped or U-shaped profile or a curvilinear profile, for example semicircular as shown by way of example in Figure 3 and Figure 4.

Alternatively, the, or each, secondary channel 10 may be defined by a through orifice or hole (shown with a dotted line in Figures 3 and 4) formed in the side wall or by a through orifice or hole (shown with a dotted line in Figure 4) formed in the continuous base. From a geometric point of view, the through-orifice may have a polygonal or curvilinear profile, for example circular or oval.

As shown in the figures, and in particular in Figure 4, the free edge 15 of the side wall 13 lies on the same plane, with the exception of the recess forming the secondary channel 10 (when the latter is defined by a recess or indentation on the aforementioned edge). Whether the secondary channel 10 has the shape of a recess in the free edge 15 or whether the secondary channel 10 includes a through orifice or hole made in the side wall 13, this secondary channel extends transversely to the side wall 13, crossing the entire thickness of the side wall itself so as to constantly connect the inlet 1i and the internal volume of the cavity 14 present in the active portion (which faces upstream) with the section of channel downstream of the active portion, which therefore faces the outlet 1u of said main channel. Similarly, if the orifice or hole 10 is made on the continuous base 12, it passes entirely through said base so as to create a fluid passage between the upstream and downstream sides of the active portion 8.

It has already been mentioned that the secondary channel 10 has a very small passage area: this is to determine a very limited flow rate through this channel and a significant resistance to fluid passage: it is believed (without wishing to be bound by theory) that passage through a very narrow secondary channel causes a damping effect in the presence of sudden movements of the active portion 8, thus reducing vibrations.

In accordance with a currently preferred solution, the secondary channel 10 has a net fluid passage section whose area is:
- at least 10 times smaller than the area of the fluid passage section of said inlet 1i of the main channel; and
- at least 10 times smaller than the area of the fluid passage section of said outlet 1u of the main channel.

For example, the secondary channel 10 may have a net fluid passage cross-section whose area is:
- at least 100 times smaller than the area of the fluid passage section of said inlet 1i of the main channel; and
- at least 100 times smaller than the area of the fluid passage section of said main channel outlet 1u.

In one possible embodiment, the secondary channel 10 has a net fluid passage section whose area is less than 2 mm², optionally less than 1 mm², for example between 0.20 and 0.75 mm²; furthermore, the axial extension of the secondary channel is less than 3 mm, optionally less than 2 mm, for example between 0.15 mm and 1.5 mm.

Moving on now to describe in greater detail the intermediate portion 2m of the main channel 2, i.e., the area of the main channel where the active portion 8 of the flow regulating organ 7 operates, it should be noted that the intermediate portion of the main channel defines an intermediate opening 2a, interposed between the inlet and outlet. The intermediate opening 2a, of predetermined size and shape, is delimited by a radially inner edge 16 of the counter-surface 11 described above. As can be seen from Figures 2a-2c, the radially inner edge 16 emerges transversely with respect to a surrounding flat region 17 of the counter-surface 11: this radially inner edge extends in practice along the entire perimeter of the intermediate opening 2a. Again with reference to Figures 2a-2c, it can be seen that the radially inner edge 16 delimiting the intermediate opening 2a has the shape of a projection that extends coaxially and in a radially inner position with respect to said side wall 13 of the active portion 8, so that in the event of the active portion descending towards the counter-surface, the radially inner edge 16 can fit at least partially into the cavity 14 of the active portion 8 and act, for example, as a centering member for the active portion itself.

Finally, again with reference to a further possible variant of the invention (not illustrated), the secondary channel 10 or a further secondary channel 10' may be defined at and crossing said radially inner edge 16 of the reference surface (for example in the form of a recess or in the form of a through orifice). In a further alternative, the secondary channel 10, 10' can be formed through a wall of the valve body at the intermediate zone 2m and near the intermediate opening 2a so as to form a thin bypass straddling the intermediate opening itself.

Returning now to the structure of the flow regulating organ 7, it has already been mentioned that the sealing element 3 is radially interposed between the flow regulating organ 7 and the valve body 1. In particular, the flow regulating organ 7 is coupled to the sealing element 3 so that the active portion 8 operates constantly in the main channel 2. In addition to the active portion 8, the flow regulating organ 7 comprises a slider body 18 operatively connected to the active portion 8; the slider body 18, at least in the operating condition of the valve, is axially movable with respect to the valve body 1 along a predefined axis X to position the active portion 8 of the flow regulating organ 7 in a plurality of positions relative to the valve body 1, determining a variable amplitude of the fluid passage opening 9: this amplitude is variable as a function of a value assumed by a pressure differential between a pressure (P+) present in the auxiliary chamber and a pressure (P-) present in the main channel 2.

As can be seen, for example, in Figures 2a-2c, the sealing element 3 comprises an annular membrane having an outer perimeter 3a fixed in a fluid-tight manner to the valve body and an inner perimeter 3b fixed in a fluid-tight manner to an intermediate zone 18m of the slider body 18, so that the slider body 18 has a part extending inside the main channel 2 and a part extending inside the auxiliary chamber 4 (the part of the slider body 18 extending into main channel 2 carries the active portion 8).

The flow regulating organ 7 also comprises an elastic body 19, for example a coil spring, acting on the slider body; the elastic body 19 is configured to counteract a movement of the slider body 18 and the active portion 8 that reduces the amplitude of the passage opening 9.

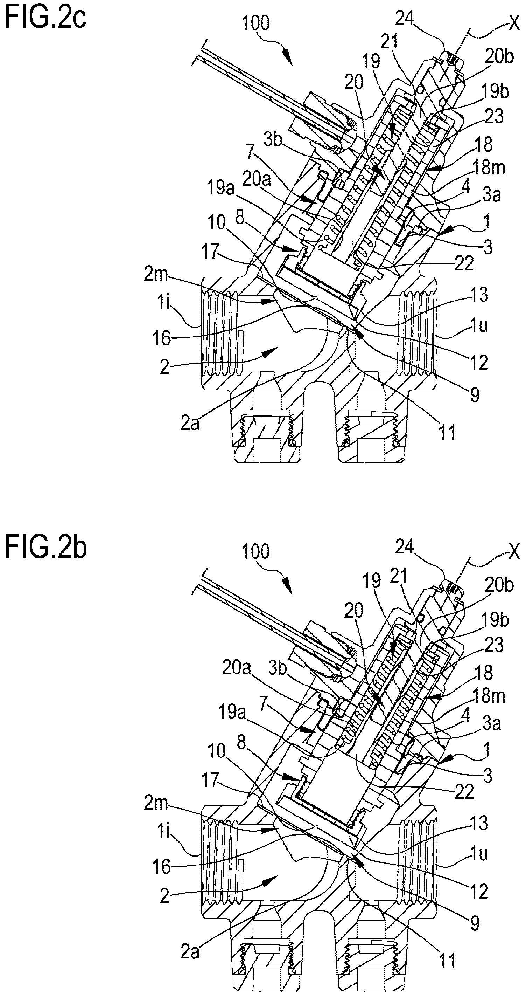

As shown in Figure 2, the slider body 18 may have a tubular shape and, as already mentioned, carries the active portion 8 at its end, which may, for example, be screwed to one end of the slider body 18; the flow regulating organ 7 also includes a rod 20, having at least one predominant portion extending internally within the slider body; more specifically, the rod 20 has a first terminal portion 20a that is axially detached from the slider body 18 (so that relative motion between the slider body and the rod may be achieved) and engages a first end 19a of the elastic body 19; a second terminal portion 20b of the rod 20 passes through an axial opening 21 provided on the slider body 18 on the opposite side to said active portion 8; in turn, the elastic body 19 (for example, the aforementioned coil spring) is radially interposed between the rod 20 and the slider body 18 and operates in a cavity defined internally within the tubular body of the slider body itself. As mentioned, the first end 19a of the elastic body or spring 19 engages the terminal portion 20a of the rod (so as to be axially locked with respect to the latter), while a second end 19b of the elastic body is axially active on the slider body 18.

With reference to Figures 2a-2c, it can be seen that rod 20 is not monolithic but has a first half-part 22 housed inside the slider body 18, and a second half-part 23 partially emerging from the slider body 18 and passing through a wall of the valve body; the second half-part 23 of the rod has a first end, inside the valve body, movably coupled to the first half-part 22, for example by means of a threaded coupling, and a second end (which defines the terminal portion 20b), coupled to an operating element 23. This latter can be actuated from outside the valve body 1. In practice, rotation of the operating element 24 causes a corresponding rotation of the second half-part 23 in the same direction relative to the first half-part 22 of the rod 20, thereby lengthening or shortening the rod itself.

It should be noted that the first half-part 22 of the rod 20 is axially movable with respect to the slider body at least between the following relative positions:
- an extended position, in which the rod and, in particular, the part of the rod inside the slider body assumes maximum axial extension (Figure 2a); when the first half-part 22 of the rod is in the extended position, the end part of the same first half-part 22 of the rod (which may be equipped with a plate) is close to or touches the active portion 8;
- a contracted position, in which the rod, and in particular the part of the rod inside the slider body, assumes minimum axial extension (figure 2b); when the first half-part 22 of the rod is in the contracted position, the end part of this first half-part 22 of the rod is at a maximum distance from the active portion 8;
- a plurality of intermediate positions between the extended and contracted positions (one of which is shown in figure 2c).

The adjustment of the rod through the operating element and therefore the length of the rod determine the compression of the elastic element and therefore its preload, which opposes the movement of the slider body and the active portion 8 towards the intermediate opening.

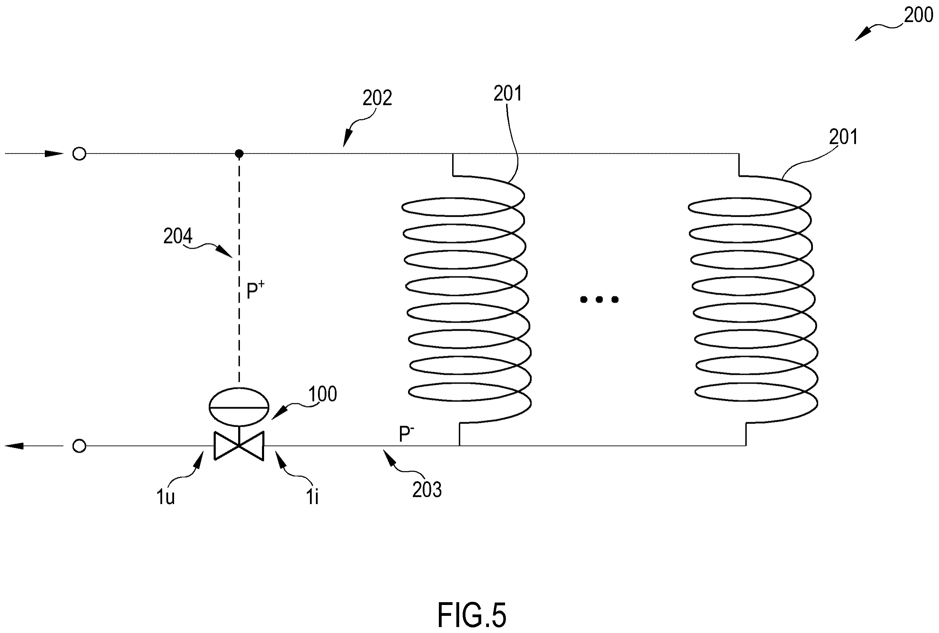

Figure 5 schematically shows a hydraulic system 200 (for example of a heating or cooling plant of a civil structure, such as a building) comprising a delivery pipe 202 supplying a predetermined number of users 201, optionally a predetermined number of heat exchangers, and a return pipe 203 configured to receive fluid output from the users; the hydraulic system 200 also includes a valve 100 as described above or as claimed, installed on the return pipe. The control inlet of the valve is connected, by means of the small pipe 6 described above, to a point on the delivery pipe 202 where fluid at pressure P+ acts.

In accordance with a further aspect of the invention, a method for controlling the hydraulic system 200 is described. The method comprises a step of installing a valve 100 as described or in accordance with any of the claims. The valve is installed at the return pipe 203 of the system 200, so that the inlet 1i of the valve 100 is connected upstream to the return pipe 203 and so that the outlet 1u of the valve 100 is connected downstream to the same return pipe 203. In addition, the control inlet 5 is connected to the delivery pipe 202, thus creating a pressure tap 204 that carries the pressure present in the delivery pipe (taken at a point upstream of one or more users 201) to the auxiliary chamber 4; once the valve is connected in this way, at least one valve adjustment phase 100 may be provided by means of an action on the operating element 24. In this way, it is possible to configure valve 100 in the operating condition described above by defining a greater or lesser axial extension of rod 20 and therefore, respectively, a lesser or greater preload of the elastic element or spring 19 operating inside the valve body and acting on the slider body 18. In use, thanks to the variation in the size of the fluid passage opening 9 between the inlet 1i and the outlet 1u depending on the positions assumed by the active portion 8 of the flow regulating organ 7 relative to the valve body 1, it is possible to maintain a pressure differential between the pressure (P+) present in the auxiliary chamber and the pressure (P-) present in the main channel within a predetermined range of a predefined value (established by the preload imposed on the elastic element) independently of the flow of fluid through the return conduit 203 or the load conditions of the system 200.

The method may comprise a step of variation in the setting of the value of the aforementioned pressure differential [(P+) - (P-)]: this variation step takes place by acting on the operating element and varying its position, in particular its angular position, so that this operating element assumes a new position relative to the valve body 1, thus determining the alteration of the length of the rod 20 and therefore the preload state of the elastic element acting on the movable slider body.

In accordance with a further aspect, an adjustment step of valve 100 may also be provided by means of an action on the operating element that configures the valve 100 in at least one further operating configuration in which the fluid passage opening between the inlet 1i and the outlet 1u is maintained at a predefined size or amplitude regardless of the pressure differential between the pressure (P+) present in said auxiliary chamber and the pressure (P-) present in the main channel.

The present invention may have numerous variations that can be implemented by the skilled person, for example by an expert of heating and/or air conditioning systems, and which all fall within the scope of protection defined by the following claims.

## Claims

1. Differential pressure control valve for a hydraulic system, wherein the valve includes:
- a valve body (1) defining an inlet (1i), an outlet (1u), a main channel (2) that places the inlet (1i) in fluid communication with the outlet (1u), and an auxiliary chamber (4),
- a sealing element (3) separating the main channel (2) from the auxiliary chamber (4),
- a control inlet (5) in fluid communication with the auxiliary chamber (4),
- a flow regulating organ (7) having an active portion (8) operating in the main channel (2),
wherein the valve is configurable in an operating condition wherein the active portion (8) of the flow regulating organ (7) cooperates with an intermediate portion (2m) of said main channel (2), so as to define at least one passage opening (9) of variable amplitude that allows fluid communication between the inlet (1i) and the outlet (1u); **characterized by the fact that** at least one between the active portion (8) of the flow regulating organ (7) and the intermediate portion (2m) of the main channel (2) defines a secondary channel (10; 10') that places the inlet (1i) and outlet (1u) in fluid communication.

2. Valve according to claim 1, wherein the secondary channel (10; 10') is configured to constantly place in fluid communication the inlet (1i) and the outlet (1u), regardless of the position of the active portion (8) of the flow regulating organ (7) with respect to the main channel (2).

3. Valve according to any one of the preceding claims, wherein in said operating condition the active portion (8) of the flow regulating organ (7) is able to reach an end-stroke position wherein the active portion (8) itself acts in abutment against a corresponding counter-surface (11) of the intermediate portion (2m) of said main channel (2), and wherein the secondary channel (10; 10') places the inlet (1i) and outlet (1u) in fluid communication even when the active portion (8) of the flow regulating organ (7) is in said end-stroke position.

4. Valve according to the previous claim, wherein the active portion (8) of the flow regulating organ (7) includes, on one side facing the counter-surface (11) of the intermediate portion (2m) of the main channel (2):
- a continuous base (12), optionally having a flat surface, and
- a side wall (13), emerging transversely from the continuous base (12) approaching said counter-surface (11) and defining a cavity of the active portion (8) facing the same counter-surface;
optionally wherein the side wall (13) emerges from a perimeter edge of the continuous base (12) and has constant height (h) for a preponderant part of its development around the continuous base, said height (h) being measured perpendicular to the continuous base (12).

5. Valve according to the previous claim, wherein:
- the secondary channel (10) is a through orifice traversing said side wall (13) or said continuous base (12); optionally wherein said through orifice has a curvilinear profile, e.g., circular;
or
- the secondary channel (10) is defined by a recess present on a free end edge of the side wall (13) opposite the continuous base (12); optionally wherein said recess has a curvilinear profile, e.g., semicircular.

6. Valve according to the previous claim, wherein the secondary channel (10) is defined by said recess and wherein the free end edge of said side wall (13) lies on the same plane with the exclusion of said recess forming the secondary channel (10),
said recess extending transversely to the side wall (13) and traversing the entire thickness of the side wall itself so as to constantly place in fluid communication an internal volume of the cavity defined in the active portion (8) with the outlet (1u) of said main channel (2).

7. Valve according to any one of the preceding claims, wherein the secondary channel (10; 10') has a net fluid passage section whose area is:
- at least 10 times smaller, optionally at least 100 times smaller, than the area of the fluid passage section of said inlet (1i) of the main channel (2); and
- at least 10 times smaller, optionally at least 100 times smaller, than the area of the fluid passage section of said outlet (1u) of the main channel (2);
and
wherein the secondary channel (10; 10') has a net fluid passage cross-section whose area is less than 2 mm², optionally less than 1 mm², for example, between 0.20 and 0.75 mm², optionally where the axial extension of the secondary channel (10; 10') is less than 3 mm, more optionally less than 2 mm, e.g., between 0.15 mm and 1.5 mm.

8. Valve according to any one of the preceding claims, in combination with claim 3 or 4, wherein the intermediate portion (2m) of the main channel (2) defines an intermediate opening (2a), interposed between the inlet (1i) and outlet (1u), of predetermined size and shape, said intermediate opening being bounded by a radially inner edge (16) of the counter-surface (11);
and wherein said radially inner edge (16) emerges transversely with respect to a surrounding flat region (17) of the counter-surface (11), said radially inner edge (16) extending along an entire perimeter of the intermediate opening (2a), coaxially and in a radially inner position with respect to said side wall (13).

9. Valve according to the preceding claim wherein the secondary channel or an additional secondary channel (10; 10') is defined at and across said radially inner edge (16) of the counter-surface (11).

10. Valve according to any one of the preceding claims, wherein the secondary channel (10; 10') is distinct from and additional to the main channel (2) and wherein the flow passage cross section of the secondary channel does not change irrespective of the position of the active portion (8) of the flow regulating organ (7).

11. A valve according to any one of the preceding claims, wherein the sealing element (3) is radially interposed between the flow regulating organ (7) and the valve body (1), and wherein the flow regulating organ (7) is coupled to the sealing element (3) so as to present the active portion (8) operating in the main channel (2);
wherein the flow regulating organ (7) comprises a slider body (18) operatively connected to the active portion (8); and
wherein said slider body (18), in the operating condition of the valve, is axially movable with respect to the valve body (1) along a predetermined axis (X) to position the active portion (8) of the flow regulating organ (7) in a plurality of positions relative to the valve body (1) resulting in a variable amplitude of the passage opening (9) of fluid, said amplitude being variable according to a value assumed by a pressure differential between a pressure (P+) present in the auxiliary chamber (4) and a pressure (P-) present in the main channel (2).

12. Valve according to the previous claim, wherein the sealing element (3) comprises a diaphragm of annular conformation having an outer perimeter (3a) fluid-tightly attached to the valve body (1) and an inner perimeter (3b) fluid-tightly attached to an intermediate area of the slider body (18), so that the slider body itself has a portion extending within the main channel (2) and a portion extending within the auxiliary chamber (4); and
wherein the flow regulating organ (7) includes a elastic body (19), optionally a coil spring, active on the slider body; and wherein said elastic body (19) is configured to counteract a movement of the slider body (18) and the active portion (8) that reduces the amplitude of the passage opening (9).

13. A valve according to any one of the preceding two claims, wherein the slider body (18) has tubular conformation and terminally carries the active portion (8), and wherein the flow regulating organ (7) comprises a rod (20), having a portion, optionally a preponderant portion, developing internally to the slider body (18);
wherein said elastic body (19) is interposed between said rod (20) and said slider body (18);
wherein said rod (20) has a first end portion to which a first end of the elastic body (19) is constrained, and a second end portion passing through an axial opening provided on the slider body (18) on the opposite side of said active portion (8); and
wherein, a second end of the elastic body (19) is axially active on the slider body (18).

14. Valve according to the previous claim, wherein the rod (20) presents:
- a first half-part (22) housed internally in the slider body (18), and
- a second half-part (23) partially emerging from the slider body (18) and passing through a wall of the valve body (1),
wherein the second half-part (23) of the rod has a first end, inside the valve body (1), removably coupled to the first half-part (22), optionally by a threaded coupling, so that the overall length of the rod (20) can be adjusted, and
wherein an operating element (24), operable from outside the valve body (1), is coupled to a second end of the second half-part (23) of the rod (20), wherein a rotation of the operating element (24) results in a concordant rotation of the second half-part (23) of the rod (20) and thus an elongation or shortening of the rod (20); optionally wherein the first half-part (22) of the rod (20) is axially movable relative to the slider body (18) at least between the following relative positions:
- an extended position, wherein the part of the rod (20) inside the slider body (18) has maximum axial extension,
- a contracted position, wherein the part of the rod (20) inside the slider body has minimal axial extension,
- a plurality of intermediate positions between the extended and contracted positions.

15. A hydraulic system (200), optionally of a heating and/or cooling plant, comprising a delivery pipe (202) supplying a predetermined number of users (201), optionally a predetermined number of heat exchangers, and a return pipe (203) configured to receive fluid output from the users, the hydraulic system (200) also comprising a valve (100) according to any one of the preceding claims,
wherein the valve (100) is installed on the return pipe (203) with the control inlet (5) connected to the delivery pipe (202) so as to receive a pressure signal from the delivery pipe.
